# FASCICULE DE BREVET EUROPEEN

(11) **EP 2 699 433 B1**
(45) Date de publication et mention de la délivrance du brevet: **08.07.2020**
(21) Numéro de dépôt: 12717188.2
(22) Date de dépôt: 17.04.2012
(51) Int. Cl.: B60H 1/22, B60H 1/32, B60H 1/00, B60K 1/04, B60K 11/02, B60K 1/00

(54) **DISPOSITIF DE CONDITIONNEMENT THERMIQUE D'UN VEHICULE AUTOMOBILE**
WÄRMEREGELUNGSVORRICHTUNG FÜR EIN KRAFTFAHRZEUG
THERMAL CONDITIONING DEVICE FOR A MOTOR VEHICLE

(30) Priorité: 20.04.2011 FR 1101230
(43) Date de publication de la demande: 26.02.2014
(73) Titulaire: Valeo Systemes Thermiques, 78321 Le Mesnil Saint Denis (FR)
(72) Inventeur: YAHIA, Mohamed, F-75005 Paris (FR)
(74) Mandataire: Tran, Chi-Hai
(86) Numéro de dépôt international: PCT/EP2012/001647
(87) Numéro de publication internationale: WO 2012/143115

(56) Documents cités:
- EP-A1- 2 301 777
- EP-A2- 0 144 917
- EP-A2- 0 842 798
- DE-A1-102008 035 216
- US-A1- 2003 089 493

## Description

L'invention se rapporte au domaine des véhicules automobiles et plus particulièrement aux dispositifs de conditionnement thermique de tels véhicules, notamment des véhicules électriques.

Les véhicules électriques ne comprenant pas un moteur thermique, la fonction de chauffage d'un habitacle du véhicule ne peut plus être réalisée par un radiateur thermique dans lequel circule une partie du liquide refroidissement du moteur thermique.

Afin d'assurer la fonction de chauffage de l'habitacle du véhicule, une solution proposée est d'utiliser des dispositifs de chauffage additionnel électrique, tels que des radiateurs électriques, à la place du radiateur thermique. Cette solution présente l'inconvénient de consommer l'énergie électrique de la batterie du véhicule, réduisant ainsi l'autonomie du véhicule. De plus, les puissances électriques mises en jeu sont importantes, pouvant aller jusqu'à 5 kW.

Afin de réduire la consommation électrique de la batterie du véhicule et de fournir un chauffage de l'habitacle du véhicule, il a été proposé d'utiliser une boucle de climatisation réversible et pouvant fonctionner dans un mode dit "chauffage" ou "pompe à chaleur". A cet effet, la boucle de climatisation comprend, notamment, de manière connue un compresseur, un échangeur de chaleur extérieur, un organe de détente et un premier échangeur de chaleur intérieur et un deuxième échangeur de chaleur intérieur. Le deuxième échangeur de chaleur intérieur est susceptible de permettre la restitution de la chaleur d'un fluide réfrigérant circulant dans la boucle de climatisation à un flux d'air intérieur traversant une installation de chauffage, ventilation et/ou climatisation du véhicule. Les documents EP 2 301 777 A1 ou EP 0 842 798 A2 divulguent des dispositifs de conditionnement thermique pouvant fonctionner dans un mode "pompe à chaleur".

Toutefois, un tel agencement assure uniquement une fonction de chauffage de l'habitacle du véhicule sans permettre le conditionnement thermique de la batterie.

De plus, lors des conditions climatiques hivernales, en particulier lorsque la température extérieure est extrêmement basse, par exemple aux alentours de - 10°C, la capacité thermique permettant d'assurer la fonction de chauffage dans le mode "pompe à chaleur" est très limitée. Ceci est particulièrement le cas pour les fluides réfrigérants chimiques sous-critiques, tels que les fluides réfrigérants connus sous les appellations R134A ou HFO 1234 YF.

Un des buts de l'invention est donc de remédier aux inconvénients mentionnés précédemment et de définir un dispositif de conditionnement thermique d'un véhicule, notamment un véhicule électrique, comprenant une boucle de climatisation permettant d'assurer une fonction de chauffage d'un habitacle du véhicule et une fonction de conditionnement thermique d'une batterie. La présente invention propose également d'assurer une fonction de stockage de calories dans la batterie.

L'invention concerne donc un dispositif de conditionnement thermique d'un véhicule automobile, avantageusement un véhicule électrique, selon la revendication 1.

Une telle configuration permet d'utiliser la batterie dans des modes de fonctionnement permettant, soit de stocker des calories, soit de restituer des calories, notamment lors des conditions climatiques hivernales.

Selon un autre aspect de l'invention, le moyen de chauffage est un dispositif de chauffage électrique, par exemple un chauffage électrique radiant, ayant une puissance maximale de 3.5 kW, de préférence d'une puissance de 1,5 kW. Selon un autre aspect de l'invention, le dispositif de conditionnement thermique comporte une unité de chauffage supplémentaire du flux d'air intérieur destiné à être distribué dans l'habitacle, par exemple un dispositif de chauffage additionnel à effet CTP (Coefficient Positif de Température).

De plus, la boucle de climatisation comporte également un organe de commutation permettant le contournement du condenseur principal.

Enfin, en complément, la boucle de climatisation comporte également un condenseur intérieur apte à chauffer le flux d'air intérieur destiné à être distribué dans l'habitacle du véhicule.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- la figure 1 montre une représentation schématique générale d'une boucle de climatisation d'un habitacle d'un véhicule ne correspondant pas à la présente invention,
- la figure 2 montre une représentation schématique de la boucle de climatisation de la figure 1 dans un mode de fonctionnement dit "refroidissement" de l'habitacle,
- la figure 3 montre une représentation schématique de la boucle de climatisation de la figure 1 dans un mode de fonctionnement dit "chauffage" de l'habitacle,
- la figure 4 montre une représentation schématique générale d'une boucle de climatisation reliée à une boucle de conditionnement thermique d'une batterie selon la présente invention,
- la figure 5 montre une représentation schématique de la boucle de climatisation et de la boucle de conditionnement thermique de la figure 4 dans un mode de fonctionnement dit "chauffage" de l'habitacle et de la batterie,
- la figure 6 montre une représentation schématique de la boucle de climatisation et de la boucle de conditionnement thermique de la figure 4 dans une variante du mode de fonctionnement dit "chauffage" de l'habitacle,
- la figure 7 montre une représentation schématique de la boucle de climatisation et de la boucle de conditionnement thermique de la figure 4 dans une autre variante du mode de fonctionnement dit "chauffage" de l'habitacle, et
- la figure 8 montre une représentation schématique de la boucle de climatisation et de la boucle de conditionnement de la figure 4 dans un mode fonctionnement dit "refroidissement" de l'habitacle.

Sur les différentes figures, les éléments identiques portent les mêmes numéros de référence. Sauf mention contraire, les éléments identiques dans les différentes figures, qui vont être décrites, ont donc les mêmes caractéristiques techniques et opèrent selon les mêmes modalités de fonctionnement.

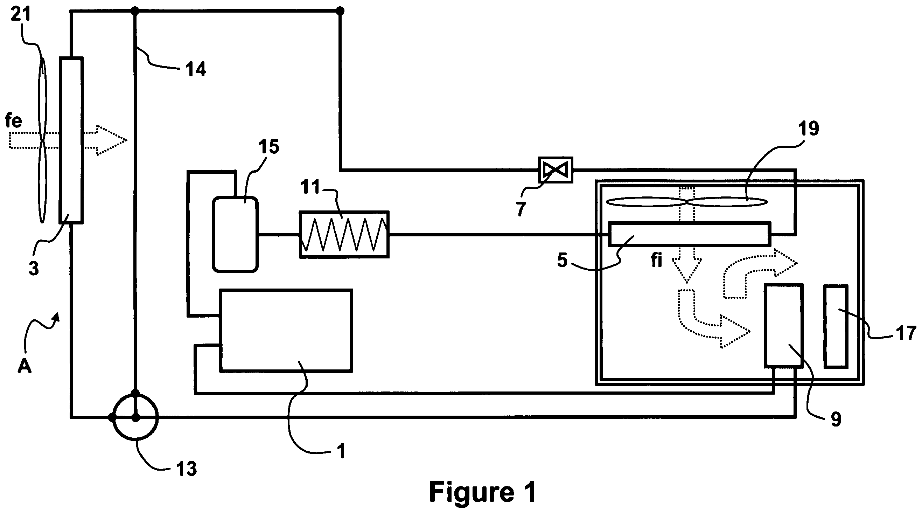

La figure 1 montre une représentation schématique générale d'une boucle de climatisation A d'un habitacle d'un véhicule ne correspondant pas à la présente invention.

Selon la présente invention, la boucle de climatisation A est parcouru par un fluide réfrigérant et comprend, notamment :
- un compresseur 1, apte à de comprimer le fluide réfrigérant,
- un condenseur intérieur 9, constitué par un échangeur de chaleur agencé dans un boîtier d'une installation de chauffage, ventilation et/ou climatisation d'un habitacle d'un véhicule automobile et permettant un chauffage d'un flux d'air intérieur fi, mis en mouvement par un groupe moto-ventilateur 19 ou pulseur 19, et apte à être distribué dans l'habitacle,
- un organe de commutation 13, par exemple une vanne trois voies 13,
- un condenseur principal 3, constitué par un échangeur de chaleur traversé par un flux d'air extérieur fe, mis en mouvement par un groupe moto-ventilateur 21,
- une conduite de contournement 14, permettant de définir une circulation de fluide réfrigérant contournant et ne passant pas par le condenseur principal 3,
- un organe de détente 7, par exemple une vanne d'expansion 7,
- un évaporateur 5, constitué par un échangeur de chaleur agencé dans le boîtier de l'installation de chauffage, ventilation et/ou climatisation de l'habitacle automobile et permettant un refroidissement du flux d'air intérieur fi,
- une unité de chauffage 11, apte à permettre un chauffage du fluide réfrigérant et, optionnellement,
- un réservoir de stockage 15, apte à stocker le fluide réfrigérant.

Les divers composants mentionnés ci-dessus sont reliés entre eux par des conduites de la boucle de climatisation A, permettant de canaliser le fluide réfrigérant entre les divers composants.

Le flux d'air intérieur fi destinée à être distribué dans l'habitacle automobile est généralement mis en mouvement à travers le boîtier de l'installation de chauffage, ventilation et/ou climatisation par le groupe moto-ventilateur 19, ou pulseur 19. Le boîtier de l'installation de chauffage, ventilation et/ou climatisation comporte divers composants, tels que le condenseur intérieur 9, l' évaporateur 5 ..., permettant un traitement aéro-thermique du flux d'air intérieur fi. De plus, le flux d'air intérieur fi est susceptible également de passer à travers une unité de chauffage supplémentaire 17, par exemple un chauffage par résistance électrique à effet CTP (Coefficient de Température Positif).

L'unité de chauffage supplémentaire 17 est un composant optionnel de l'installation de chauffage, ventilation et/ou climatisation.

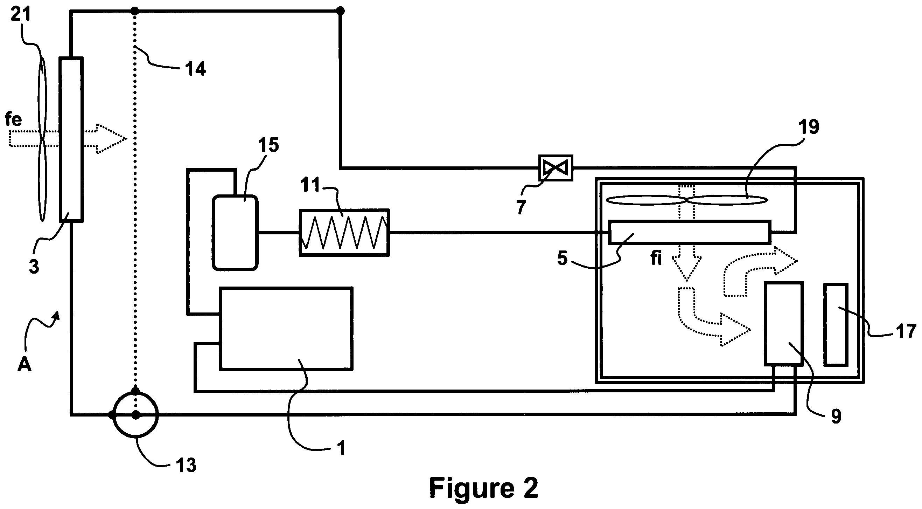

La figure 2, montre une représentation schématique de la boucle de climatisation A de la figure 1 dans un mode de fonctionnement dit "refroidissement" de l'habitacle.

Par convention, dans la présente description, les conduites de la boucle de climatisation A qui, selon le mode de fonctionnement considéré, ne sont pas parcourues par le fluide réfrigérant, sont représentées en traits pointillés. Les conduites de la boucle de climatisation A qui, selon le mode de fonctionnement considéré, sont parcourues par le fluide réfrigérant, sont représentées en traits continus.

Selon le mode de fonctionnement dit "refroidissement" de l'habitacle, dans un premier temps, le fluide réfrigérant est comprimé par le compresseur 1. Le fluide réfrigérant est, par exemple, un fluide réfrigérant sous-critique, tel que du R134A ou HFO 1234YF, ou un fluide réfrigérant sur-critique, tel que du R744A, ou tout autre fluide réfrigérant analogue.

En sortie du compresseur 1, le fluide réfrigérant comprimé traverse le condenseur interne 9, agencé dans le boîtier de l'installation de chauffage, ventilation et/ou climatisation, avantageusement disposé dans l'habitacle, dans lequel le fluide réfrigérant est en toute ou partie refroidi et/condensé, et potentiellement soumis à un changement d'état. Le fluide réfrigérant est donc apte à céder de la chaleur du fait de son refroidissement et/ou de sa condensation.

En sortie du condenseur interne 9, le fluide réfrigérant traverse l'organe de commutation 13, configuré de sorte à ce que le fluide réfrigérant est dirigé vers le condenseur principal 3, généralement placé en face avant du véhicule.

Ainsi, dans le mode de fonctionnement dit "refroidissement" de l'habitacle, le fluide réfrigérant ne circule pas dans la conduite de contournement 14.

A la traversée du condenseur principal 3, le fluide réfrigérant est apte à se se refroidir et/ou se condenser, et potentiellement à changer d'état. Dans le cas d'un fluide réfrigérant sous-critique, il est alors à l'état liquide. Dans le condenseur principal 3, le fluide réfrigérant cède la chaleur au flux d'air extérieur fe. Le flux d'air extérieur fe est alors réchauffé.

En sortie du condenseur principal 3, le fluide réfrigérant traverse l'organe de détente 7 dans lequel il est détendu.

Par suite, le fluide réfrigérant arrive au niveau de l'évaporateur 5 dans lequel le fluide réfrigérant est en toute ou partie vaporisé. Le fluide réfrigérant est alors composé d'un mélange d'une phase liquide et d'une phase gazeuse en proportion variable. Dans l'évaporateur 5, le fluide réfrigérant capte de la chaleur au flux d'air intérieur fi destiné à être distribué dans l'habitacle. Le flux d'air intérieur fi est alors refroidi.

Enfin, le fluide réfrigérant traverse le réservoir de stockage 15 dans lequel il est stocké. Le réservoir de stockage 15 permet également d'assurer la séparation de la phase liquide et la phase gazeuse du fluide réfrigérant. Par suite, le fluide réfrigérant est alors aspiré par le compresseur 1.

Dans le mode de fonctionnement dit "refroidissement" de l'habitacle, l'unité de chauffage 11 n'est pas en fonctionnement.

De plus, le boîtier de l'installation de chauffage, ventilation et/ou climatisation comprend, préférentiellement, des moyens de mixage du flux d'air intérieur fi. Les moyens de mixage du flux d'air intérieur fi sont, par exemple, des volets canalisant le flux d'air intérieur fi dans le boîtier de l'installation de chauffage, ventilation et/ou climatisation.

Avantageusement, dans le mode de fonctionnement dit "refroidissement" de l'habitacle, les moyens de mixage du flux d'air intérieur fi sont configurés de sorte que la totalité ou une partie du flux d'air intérieur fi, ayant traversé l'évaporateur 5, soit canalisée vers un canal d'air dit "froid" du boîtier de l'installation de chauffage, ventilation et/ou climatisation contournant un canal d'air dit "chaud", dans lequel sont disposés le condenseur intérieur 9 et l'unité de chauffage supplémentaire 17.

Ainsi, dans le mode de fonctionnement dit "refroidissement" de l'habitacle, le flux d'air intérieur fi est refroidi à la traversée du l'évaporateur 5, sans être réchauffé par le condenseur intérieur 9 et/ou l'unité de chauffage supplémentaire 17, préalablement à être distribué dans l'habitacle.

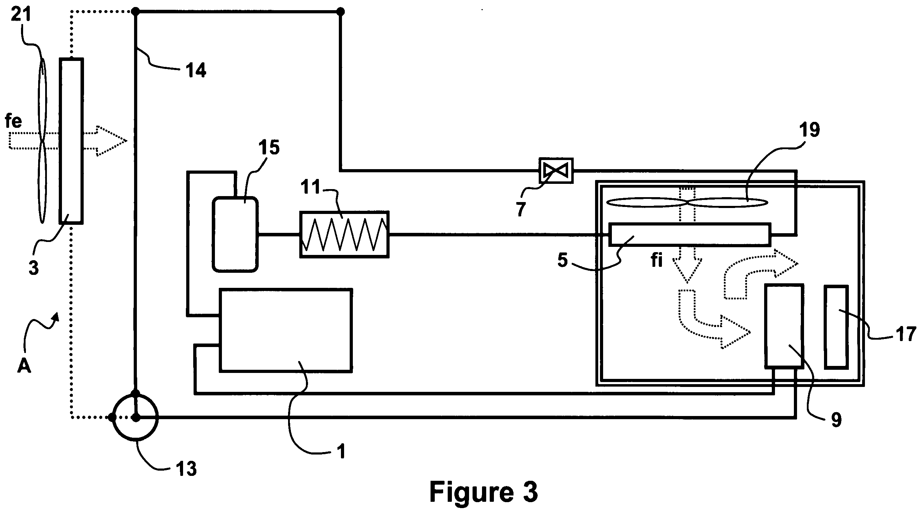

La figure 3 montre une représentation schématique de la boucle de climatisation A de la figure 1 dans un mode de fonctionnement dit "chauffage" de l'habitacle. La boucle de climatisation A fonctionne ici dans un mode de fonctionnement également appelé mode de fonctionnement dit "pompe à chaleur".

Par rapport à la configuration de la boucle de climatisation A de la figure 2, l'organe de commutation 13 est configuré de sorte à ce que le fluide réfrigérant circule dans la conduite de contournement 14. Ainsi, dans le mode de fonctionnement dit "chauffage" de l'habitacle, le fluide réfrigérant ne traverse pas le condenseur principal 3.

En sortie du compresseur 1, le fluide réfrigérant comprimé traverse le condenseur interne 9 dans lequel le fluide réfrigérant est en toute ou partie refroidi et/ou condensé. Le fluide réfrigérant est donc apte à céder de la chaleur au flux d'air intérieur fi. Ainsi, le flux d'air intérieur fi est apte à être réchauffé préalablement à être distribué dans l'habitacle.

Tel que défini précédemment, en sortie du condenseur interne 9, le fluide réfrigérant traverse l'organe de commutation 13 configuré pour permettre le contournement du condenseur principal 3.

De ce fait, le refroidissement et/ou changement d'état du fluide réfrigérant ne se fait qu'au niveau du condenseur intérieur 9. Ainsi, les calories libérées lors du refroidissement et/ou changement d'état du fluide réfrigérant sont donc transmises, en totalité, au flux d'air intérieur fi. Il n'y a pas de transmission de chaleur au flux d'air extérieur fe à la traversée du condenseur principal 3.

En sortie de l'organe de commutation 13, le fluide réfrigérant traverse l'organe de détente 7 dans lequel il est détendu.

Par suite, Le fluide réfrigérant arrive au niveau de l'évaporateur 5 dans lequel le fluide réfrigérant est en toute ou partie vaporisé. Le fluide réfrigérant est alors composé d'un mélange d'une phase liquide et d'une phase gazeuse en proportion variable. Dans l'évaporateur 5, le fluide réfrigérant capte de la chaleur au flux d'air intérieur fi destiné à être distribué dans l'habitacle. Le flux d'air intérieur fi est alors refroidi.

Enfin, le fluide réfrigérant traverse le réservoir de stockage 15 dans lequel il est stocké. Le réservoir de stockage 15 permet également d'assurer la séparation de la phase liquide et la phase gazeuse du fluide réfrigérant. Par suite, le fluide réfrigérant est alors aspiré par le compresseur 1.

Dans le mode de fonctionnement dit "chauffage" de l'habitacle, la boucle de climatisation A est configurée de sorte à ce que le fluide réfrigérant ne traverse pas d'échangeur de chaleur en contact avec le flux d'air extérieur fe. Ainsi, il y a donc peu d'influence des conditions extérieures sur le fonctionnement de la boucle de climatisation A. Les calories utilisées pour réchauffer le flux d'air intérieur fi ne sont pas issues du flux d'air extérieur fe, mais proviennent du compresseur 1.

De plus, dans le mode de fonctionnement dit "chauffage" de l'habitacle, l'unité de chauffage 11 est en fonctionnement. L'unité de chauffage 11 permet de réchauffer le fluide réfrigérant après son passage dans l'évaporateur 5. A cet effet, préférentiellement, dans la boucle de climatisation A, l'unité de chauffage 11 est disposée entre l'évaporateur 9 et le réservoir de stockage 15.

Par ailleurs, l'unité de chauffage 11 contribue à, éventuellement, permettre de finaliser le changement d'état du fluide réfrigérant entrepris dans l'évaporateur 9.

L'unité de chauffage 11 utilisée peut être un dispositif de chauffage électrique, par exemple un chauffage électrique radiant, ayant une puissance maximale de 3,5 kW, et préférentiellement une puissance de 1,5 kW. Par le biais de l'unité de chauffage 11, il est ainsi possible d'apporter les calories supplémentaires nécessaires au bon fonctionnement de boucle de climatisation A.

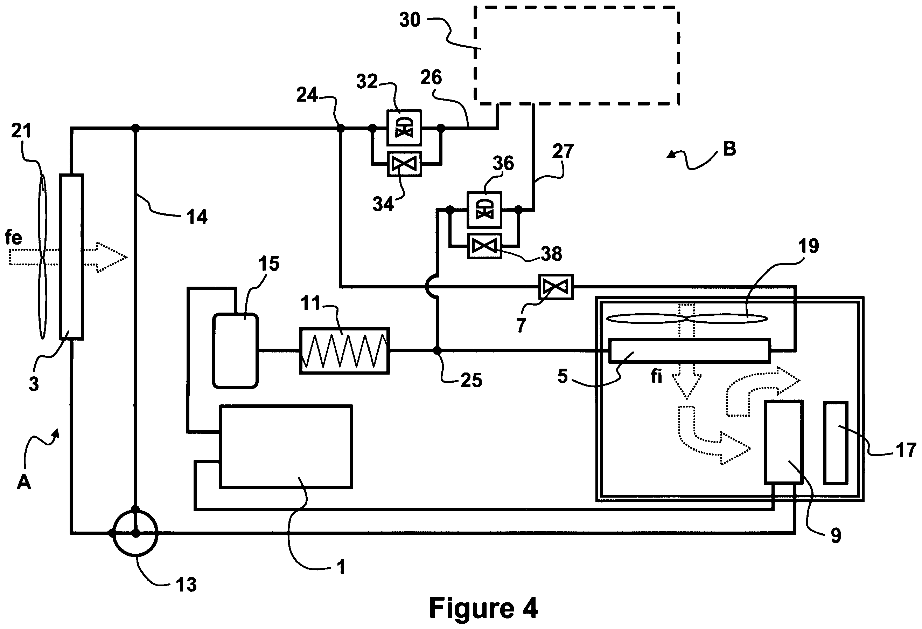

La figure 4 montre une représentation schématique d'une variante de réalisation de l'invention dans laquelle la boucle de climatisation A est reliée à une boucle de conditionnement thermique B d'une batterie 30.

La boucle de climatisation A est identique à celle présentée à la figure 1. De plus, la boucle de conditionnement thermique B de la batterie 30 est agencée en parallèle sur la boucle de climatisation A.

Dans la présente description, on entend par "batterie" un ensemble d'éléments de stockage d'énergie électrique. Ainsi, le terme "batterie" couvre un dispositif de stockage d'énergie électrique composé d'une ou plusieurs cellules électriques et, également, un ensemble composé d'un ou plusieurs dispositifs de stockage d'énergie électrique comportant, respectivement, une ou plusieurs cellules électriques.

La boucle de conditionnement thermique B de la batterie 30 est raccordée à la boucle de climatisation A en un premier point de raccordement 24 disposé en amont de l'organe de détente 7. Plus précisément, le premier point de raccordement 24 est disposé entre le condenseur principal 3 et l'organe de détente 7. Préférentiellement, le premier point de raccordement 24 est disposé entre la conduite de contournement 14 et l'organe de détente 7.

Par ailleurs, la boucle de conditionnement thermique B de la batterie 30 est raccordée à la boucle de climatisation A en un deuxième point de raccordement 25 disposé en aval de l'évaporateur 5. Plus précisément, le deuxième point de raccordement 25 est disposé entre l'évaporateur 5 et l'unité de chauffage 11. La batterie 30 est reliée, d'une part, au premier point de raccordement 24 par un premier branchement 26 et, d'autre part, au deuxième point de raccordement 25 par un deuxième branchement 27.

Selon la présente invention, le premier branchement 26 comporte un premier dispositif de détente 34 et une première vanne de contournement 32. Avantageusement, le premier dispositif de détente 34 et la première vanne de contournement 32 sont agencées en parallèles selon la circulation du fluide réfrigérant dans le premier branchement 26.

De même, le deuxième branchement 27 comporte un deuxième dispositif de détente 38 et une deuxième vanne de contournement 36. Avantageusement, le deuxième dispositif de détente 38 et la deuxième vanne de contournement 36 sont agencées en parallèles selon la circulation du fluide réfrigérant dans le deuxième branchement 27.

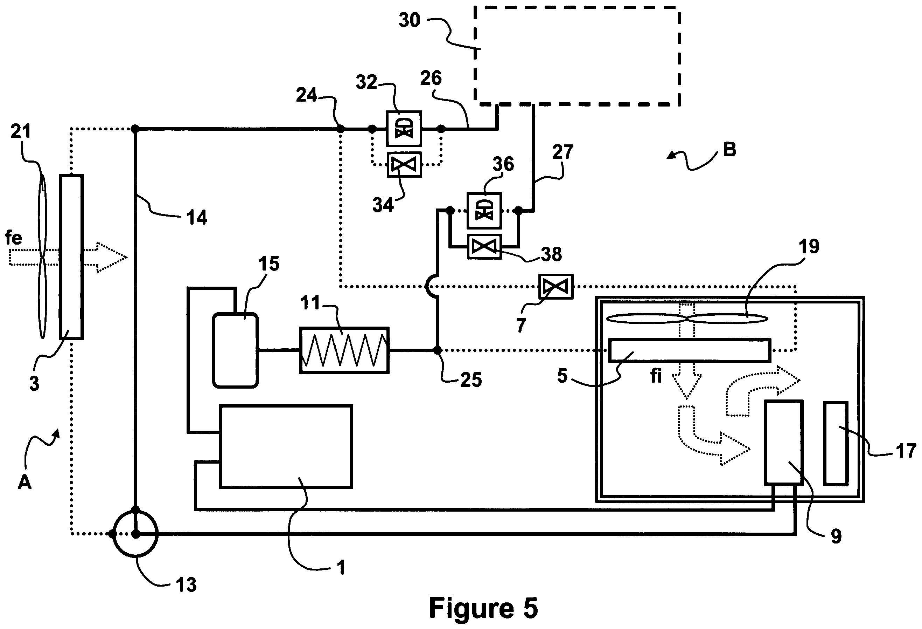

La figure 5 montre une représentation schématique de la boucle de climatisation A et de la boucle de conditionnement thermique B de la batterie 30 de la figure 4 dans un mode de fonctionnement dit "chauffage" de l'habitacle et de la batterie.

La circulation du fluide réfrigérant de la boucle de climatisation A est détournée au niveau du premier point de raccordement 24 vers le premier branchement 26 de la boucle de conditionnement thermique B de la batterie 30.

A cet effet, l'organe de détente 7 est, avantageusement, apte à être commandé afin d'être fermé et ainsi interdire une circulation du fluide réfrigérant. Ainsi, configuré, l'évaporateur 5 est isolée et n'est pas traversé par le fluide réfrigérant. Alternativement, la boucle de climatisation A peut comporter une vanne de contrôle permet d'interdire la circulation de fluide réfrigérant à travers l'organe de détente 7 et/ou l'évaporateur 5.

Selon un mode de alternatif de réalisation, la vanne de contrôle ou l'organe de détente 7 peut être configurée de sorte à permettre une circulation simultanée de fluide réfrigérant vers la boucle de conditionnement thermique B de la batterie 30 et vers l'évaporateur 5.

De plus, dans le mode de fonctionnement dit "chauffage" de l'habitacle et de la batterie 30, d'une part, le premier dispositif de détente 34 est contourné par l'ouverture de la première vanne de contournement 32. D'autre part, le deuxième dispositif de détente 38 est traversé par la fermeture de la deuxième vanne de contournement 36.

Dans le mode de fonctionnement dit "chauffage" de l'habitacle et de la batterie 30, l'organe de commutation 13 est configuré de sorte à ce que le fluide réfrigérant circule dans la conduite de contournement 14, contournant ainsi le condenseur principal 3.

Le fluide réfrigérant est chargé en calories au niveau de l'unité de chauffage 11. De plus, le fluide réfrigérant est comprimé et chargé en calorie au niveau du compresseur 1. Le fluide réfrigérant échange ces calories au niveau du condenseur intérieur 9 pour réchauffer le flux d'air intérieur fi, destiné à être distribué dans l'habitacle.

Les calories résiduelles du fluide réfrigérant parviennent à la batterie 30, en contournant le condenseur principal 3 et le premier dispositif de détente 34.

Au niveau de la batterie 30, le fluide réfrigérant échange les calories résiduelles en réchauffant la batterie 30. Dans le mode de fonctionnement dit "chauffage" de l'habitacle et de la batterie 30, la batterie 30 joue donc un rôle de condenseur, ou refroidisseur de gaz, afin de permettre la finalisation du refroidissement et/ou de la condensation du fluide réfrigérant.

Le fluide réfrigérant passe ensuite par le deuxième dispositif de détente 38 dans lequel le fluide réfrigérant est détendu. Par suite, le fluide réfrigérant traverse l'unité de chauffage 11 dans laquelle il est rechargé en calorie pour effectuer un nouveau cycle thermodynamique.

Dans le mode de fonctionnement dit "chauffage" de l'habitacle et de la batterie 30, il est possible de privilégier le chauffage de la batterie 30 au dépend du chauffage de l'habitacle en arrêtant le groupe moto-ventilateur 19 destiné à mettre en mouvement le flux d'air intérieur fi dans le boîtier de l'installation de chauffage, ventilation et/ou climatisation.

L'arrêt du groupe moto-ventilateur 19 permet de limiter ainsi les échanges thermiques au niveau du condenseur interne 9. Ainsi, le fluide réfrigérant est chargé d'une quantité plus importante de calories au niveau de la batterie 30.

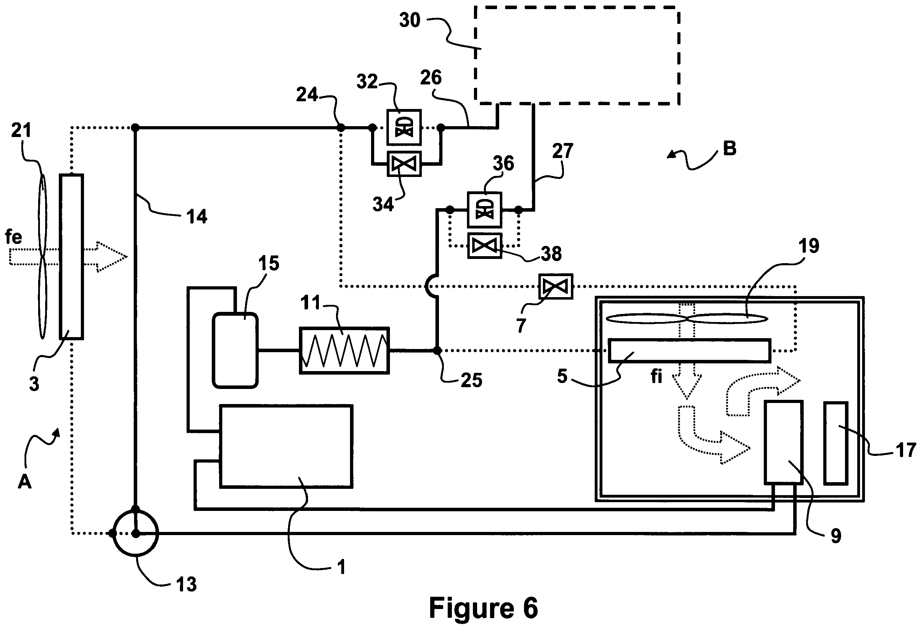

La figure 6 montre une représentation schématique de la boucle de climatisation A et de la boucle de conditionnement thermique B de la batterie 30 de la figure 4 dans un mode alternatif de fonctionnement dit "chauffage" de l'habitacle. Plus spécifiquement, le mode alternatif de fonctionnement dit "chauffage" de l'habitacle est réalisé en puisant des calories sur la batterie 30.

Dans le mode alternatif de fonctionnement dit "chauffage" de l'habitacle, l'organe de détente 7 est, avantageusement, apte à être commandé afin d'être fermé et ainsi interdire une circulation du fluide réfrigérant. Ainsi, configuré, l'évaporateur 5 est isolée et n'est pas traversé par le fluide réfrigérant.

De plus, dans le mode alternatif de fonctionnement dit "chauffage" de l'habitacle, d'une part, le premier dispositif de détente 34 est traversé par la fermeture de la première vanne de contournement 32. D'autre part, le deuxième dispositif de détente 38 est contourné par l'ouverture de la deuxième vanne de contournement 36.

Dans le mode alternatif de fonctionnement dit "chauffage" de l'habitacle, l'organe de commutation 13 configuré de sorte à ce que le fluide réfrigérant circule dans la conduite de contournement 14, contournant ainsi le condenseur principal 3.

La différence, entre le mode alternatif de fonctionnement dit "chauffage" de l'habitacle présenté à la figure 6 et le mode de fonctionnement dit "chauffage" de l'habitacle et de la batterie 30 présenté à la figure 5, réside donc dans une modification de la configuration d'ouverture et de fermeture de la première vanne de contournement 32, du premier dispositif de détente 34, de la deuxième vanne de contournement 36 et du deuxième dispositif de détente 38 de la boucle de conditionnement thermique B de la batterie 30.

Le fluide réfrigérant, ayant échangé des calories et s'étant refroidi et/ou condensé, en toute ou partie, à travers le condenseur interne 9 par échange thermique avec le flux d'air intérieur fi, est détendu au niveau du premier dispositif de détente 34. De plus, au niveau de la batterie 30, le fluide réfrigérant se charge des calories de la batterie 30 et subit donc un changement d'état.

Le fluide réfrigérant arrive ensuite à l'unité de chauffage 11, en contournant le deuxième dispositif de détente 38. Au niveau de l'unité de chauffage 11, le fluide réfrigérant est rechargé en calories afin d'augmenter la capacité de chauffage du fluide réfrigérant.

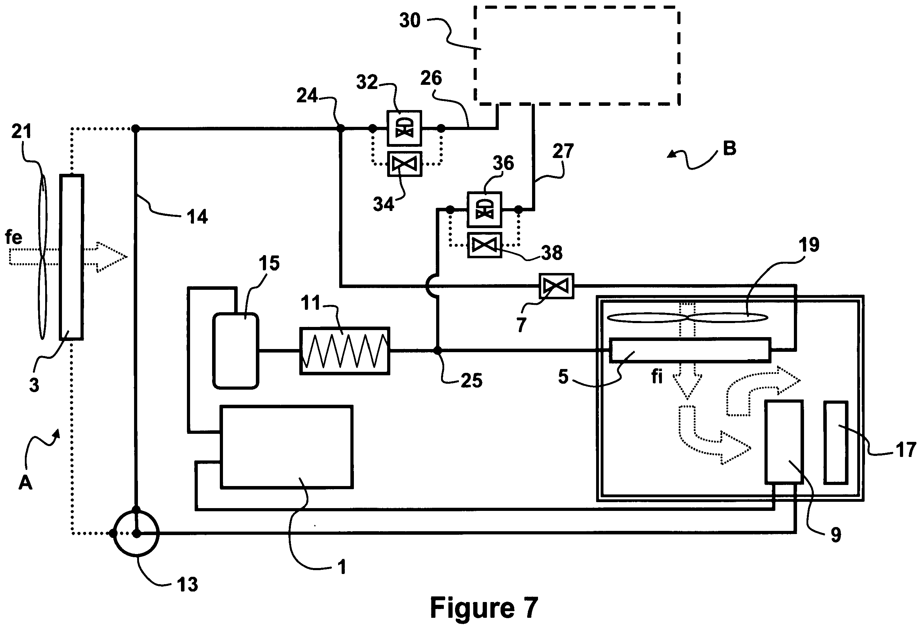

La figure 7 montre une représentation schématique de la boucle de climatisation A et de la boucle de conditionnement thermique B de la batterie 30 de la figure 4 dans une variante du mode de fonctionnement dit "chauffage" de l'habitacle. Plus spécifiquement, la variante du mode de fonctionnement dit "chauffage" de l'habitacle est réalisée en cédant ou absorbant des calories au niveau de la batterie 30.

Dans la variante du mode de fonctionnement dit "chauffage" de l'habitacle, la configuration de la boucle de climatisation A est identique à celle du mode de fonctionnement dit "chauffage" de l'habitacle présenté à la figure 3. Ainsi, l'organe de détente 7 est traversé par le fluide réfrigérant.

Ici, l'absorption ou la cession de calories au niveau de la boucle de conditionnement thermique B de la batterie 30 est gérée par une gestion de la pression au niveau du premier dispositif de détente 34 et/ou du deuxième dispositif de détente 38. Particulièrement, le premier dispositif de détente 34 et/ou le deuxième dispositif de détente 38 sont configurés de façon analogue aux modes de fonctionnement présentés aux figures 5 et 6. Il est donc possible de commander, sélectivement, l'ouverture et la fermeture de la première vanne de contournement 32, du premier dispositif de détente 34, de la deuxième vanne de contournement 36 et du deuxième dispositif de détente 38 de la boucle de conditionnement thermique B de la batterie 30.

Si l'on désire céder des calories au niveau de la batterie 30, c'est-à-dire si l'on désire réchauffer la batterie 30, comme cela est le cas dans le mode fonctionnement de la figure 5, il est nécessaire de contourner premier dispositif de détente 34 par l'ouverture de première vanne de contournement 32. De plus, le deuxième dispositif de détente 38 est traversé par la fermeture de la deuxième vanne de contournement 36. Le fluide réfrigérant arrive ainsi réchauffé au niveau de la batterie 30, jouant ainsi le rôle d'un condenseur, et prélève les calories du fluide réfrigérant.

A l'inverse, si l'on désire absorber des calories au niveau de la batterie 30, c'est-à-dire si l'on désire refroidir la batterie 30, comme cela est le cas dans le mode de fonctionnement de la figure 6, il est nécessaire de traverser le premier dispositif de détente 34 par la fermeture de la première vanne de contournement 32. D'autre part, le deuxième dispositif de détente 38 est contourné par l'ouverture de la deuxième vanne de contournement 36. Le fluide réfrigérant arrive ainsi détendu au niveau de la batterie 30, jouant ainsi le rôle d'un évaporateur. La batterie 30 cède donc des calories au fluide réfrigérant.

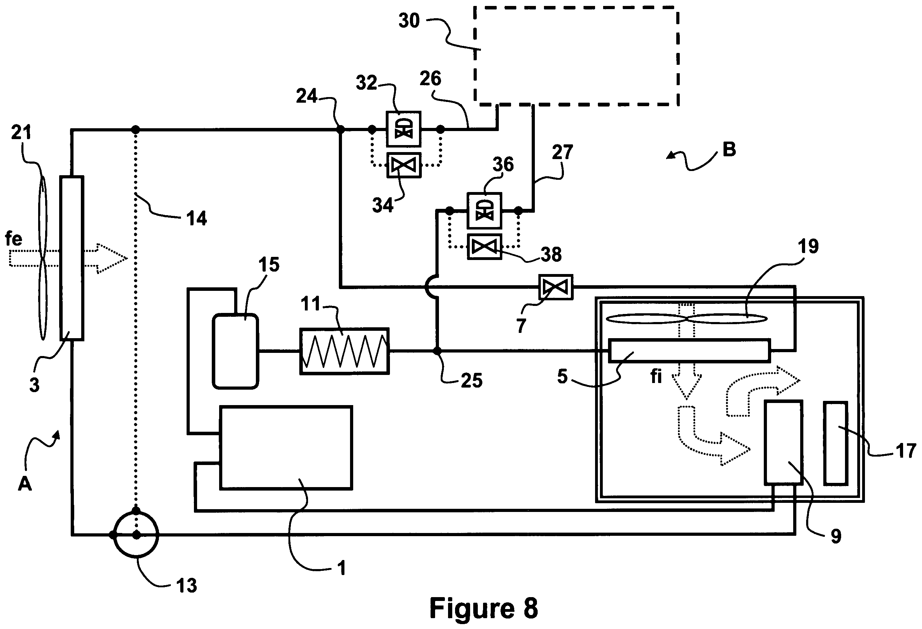

La figure 8 montre une représentation schématique de la boucle de climatisation A et de la boucle de conditionnement thermique B de la batterie 30 la figure 4 dans un mode de fonctionnement dit "refroidissement" de l'habitacle. Plus spécifiquement, le mode de fonctionnement dit "refroidissement" de l'habitacle est réalisé en stockant ou déstockant des calories au niveau de la batterie 30, c'est-à-dire en cédant ou absorbant des calories au niveau du de la batterie 30.

Dans le mode de fonctionnement dit "refroidissement" de l'habitacle, la configuration de la boucle de climatisation A est identique à celle du mode de fonctionnement dit "refroidissement" de l'habitacle présenté par la figure 2. Ainsi, l'organe de détente 7 est traversé par le fluide réfrigérant.

Ici, l'absorption ou la cession de calories au niveau de la boucle de conditionnement thermique B du de la batterie 30 est géré par une gestion de la pression au niveau du premier dispositif de détente 34 et/ou du deuxième dispositif de détente 38, comme cela est montré dans la variante du mode de fonctionnement dit "chauffage" de l'habitacle présenté par la figure 7.

Ainsi, l'on voit bien que le dispositif de conditionnement thermique selon l'invention permet, indépendamment des conditions climatiques extérieures, un chauffage efficace de l'habitacle ainsi qu'un conditionnement de la température de la batterie du véhicule.

Un tel chauffage efficace de l'habitacle et un tel conditionnement de la température de la batterie sont obtenus en utilisant la plus faible quantité d'énergie possible.

La présente invention trouve une application particulièrement avantageuse dans le domaine des véhicules automobiles électriques.

Bien évidemment, la présente invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention, telle que définie par les revendications, et notamment toutes combinaisons des différents modes de fonctionnement décrits précédemment, pouvant être pris séparément ou en association.

## Revendications

1. Dispositif de conditionnement thermique d'un véhicule automobile comprenant une boucle de climatisation (A) dans laquelle circule un fluide réfrigérant et comprenant :
- un compresseur (1),
- au moins un condenseur principal (3),
- au moins un évaporateur (5), et
- au moins un organe de détente (7),
la boucle de climatisation (A) comportant également une unité de chauffage (11) du fluide réfrigérant située en amont du compresseur (1), selon la circulation du fluide réfrigérant dans la boucle de climatisation (A),
**caractérisé en ce que** la boucle de climatisation (A) est reliée à une boucle de conditionnement thermique (B) d'une batterie (30) du véhicule,
- la boucle de conditionnement thermique (B) de la batterie (30) étant branchée en parallèle de l'évaporateur (5),
- la boucle de climatisation (A) et la boucle de régulation thermique (B) de la batterie (30) sont connectées entre elles en :
- un premier point de raccordement (24) disposé entre le condenseur principal (3) et l'organe de détente (7),
- un deuxième point de raccordement (25) disposé entre l'évaporateur (5) et l'unité de chauffage (11),
la boucle de régulation thermique (B) comprenant:
- une première vanne de contournement (32) et un premier dispositif de détente (34) agencés entre le premier point de raccordement (24) et la batterie (30),
- une deuxième vanne de contournement (36) et un deuxième dispositif de détente (38) agencés entre la batterie (30) et le deuxième point de raccordement (25).

2. Dispositif de conditionnement thermique selon la revendication 1, **caractérisé en ce que** le moyen de chauffage (11) est un dispositif de chauffage électrique.

3. Dispositif de conditionnement thermique selon la revendication 1, **caractérisé en ce que** le dispositif de chauffage électrique est un chauffage électrique radiant.

4. Dispositif de conditionnement thermique selon la revendication 3, **caractérisé en ce que** le chauffage électrique radiant a une puissance maximale de 3.5 kW, préférentiellement 1.5 kW.

5. Dispositif de conditionnement thermique selon l'une des revendications précédentes, **caractérisé en ce que** la boucle de climatisation (A) comporte également un organe de commutation (13) permettant le contournement du condenseur principal (3).

6. Dispositif de conditionnement thermique selon l'une des revendications précédentes, **caractérisé en ce que** la boucle de climatisation (A) comporte également un condenseur intérieur (9) apte à chauffer un flux d'air intérieur (fi) destiné à être distribué dans un habitacle du véhicule.

## Patentansprüche

1. Vorrichtung zur thermischen Konditionierung eines Kraftfahrzeugs, welche einen Klimakreislauf (A) umfasst, in welchem ein Kältemittel zirkuliert und der umfasst:
- einen Kompressor (1),
- wenigstens einen Hauptkondensator (3),
- wenigstens einen Verdampfer (5) und
- wenigstens ein Expansionsorgan (7),
wobei der Klimakreislauf (A) außerdem eine Erwärmungseinheit (11) für das Kältemittel aufweist, die sich, bezogen auf die Strömung des Kältemittels im Klimakreislauf (A), stromaufwärts des Kompressors (1) befindet,
**dadurch gekennzeichnet, dass** der Klimakreislauf (A) mit einem Kreislauf zur thermischen Konditionierung (B) einer Batterie (30) des Fahrzeugs verbunden ist,
- wobei der Kreislauf zur thermischen Konditionierung (B) der Batterie (30) zum Verdampfer (5) parallelgeschaltet ist,
- wobei der der Klimakreislauf (A) und der Kreislauf zur Temperaturregelung (B) der Batterie (30) miteinander verbunden sind in:
- einem ersten Anschlusspunkt (24), der zwischen dem Hauptkondensator (3) und dem Expansionsorgan (7) angeordnet ist,
- einem zweiten Anschlusspunkt (25), der zwischen dem Verdampfer (5) und der Erwärmungseinheit (11) angeordnet ist,
wobei der Kreislauf zur Temperaturregelung (B) umfasst:
- ein erstes Bypassventil (32) und eine erste Expansionsvorrichtung (34), die zwischen dem ersten Anschlusspunkt (24) und der Batterie (30) angeordnet sind,
- ein zweites Bypassventil (36) und eine zweite Expansionsvorrichtung (38), die zwischen der Batterie (30) und dem zweiten Anschlusspunkt (25) angeordnet sind.

2. Vorrichtung zur thermischen Konditionierung nach Anspruch 1, **dadurch gekennzeichnet, dass** das Erwärmungsmittel (11) eine elektrische Heizvorrichtung ist.

3. Vorrichtung zur thermischen Konditionierung nach Anspruch 1, **dadurch gekennzeichnet, dass** die elektrische Heizvorrichtung eine elektrische Strahlungsheizung ist.

4. Vorrichtung zur thermischen Konditionierung nach Anspruch 3, **dadurch gekennzeichnet, dass** die elektrische Strahlungsheizung eine maximale Leistung von 3,5 kW, vorzugsweise von 1,5 kW hat.

5. Vorrichtung zur thermischen Konditionierung nach einem der vorhergehenden Ansprüche, **dadurch gekennzeichnet, dass** der Klimakreislauf (A) außerdem ein Umschaltorgan (13) aufweist, das die Umgehung des Hauptkondensators (3) ermöglicht.

6. Vorrichtung zur thermischen Konditionierung nach einem der vorhergehenden Ansprüche, **dadurch gekennzeichnet, dass** der Klimakreislauf (A) außerdem einen inneren Kondensator (9) aufweist, der geeignet ist, einen inneren Luftstrom (fi) zu erwärmen, der dazu bestimmt ist, in einem Innenraum des Fahrzeugs verteilt zu werden.

## Claims

1. Thermal conditioning device for a motor vehicle, comprising an air conditioning circuit (A) in which a refrigerant fluid circulates, and which comprises:
- a compressor (1)
- at least one main condenser (3),
- at least one evaporator (5), and
- at least one expansion member (7),
the air conditioning circuit (A) also comprising a unit (11) for heating the refrigerant fluid, located upstream of the compressor (1), in the direction of circulation of the refrigerant fluid in the air conditioning circuit (A),
**characterized in that** the air conditioning circuit (A) is connected to a thermal conditioning circuit (B) of a battery (30) of the vehicle,
- the thermal conditioning circuit (B) of the battery (30) being connected in parallel with the evaporator (5),
- the air conditioning circuit (A) and the thermal regulation circuit (B) of the battery (30) are connected to each other at:
- a first connection point (24) arranged between the main condenser (3) and the expansion member (7),
- a second connection point (25) arranged between
the evaporator (5) and the heating unit (11), the thermal regulation circuit (B) comprising:
- a first bypass valve (32) and a first expansion device (34) that are arranged between the first connection point (24) and the battery (30),
- a second bypass valve (36) and a second expansion device (38) that are arranged between the battery (30) and the second connection point (25).

2. Thermal conditioning device according to Claim 1, **characterized in that** the heating means (11) is an electric heating means.

3. Thermal conditioning device according to Claim 1, **characterized in that** the electric heating means is a radiant electric heater.

4. Thermal conditioning device according to Claim 3, **characterized in that** the radiant electric heater has a maximum power of 3.5 kW, preferably 1.5 kW.

5. Thermal conditioning device according to one of the preceding claims, **characterized in that** the air conditioning circuit (A) also comprises a switching member (13) making it possible to bypass the main condenser (3).

6. Thermal conditioning device according to one of the preceding claims, **characterized in that** the air conditioning circuit (A) also comprises an internal condenser (9) that is able to heat an internal air flow (fi) that is intended to be distributed in a passenger compartment of the vehicle.
